# EUROPEAN PATENT APPLICATION

(11) **EP 4 343 642 A1**
(43) Date of publication of application: **27.03.2024**
(21) Application number: 21947021.8
(22) Date of filing: 22.06.2021
(51) Int. Cl.: G06N 20/00

(54) **VALIDATION METHOD DETERMINATION DEVICE AND VALIDATION METHOD DETERMINATION METHOD**

(71) Applicant: MITSUBISHI ELECTRIC CORPORATION, Chiyoda-ku Tokyo 100-8310 (JP)
(72) Inventor: MARUTA, Jun, Tokyo 100-8310 (JP); YOSHIMURA, Genta, Tokyo 100-8310 (JP)
(74) Representative: Pfenning, Meinig & Partner mbB
(86) International application number: PCT/JP2021/023501
(87) International publication number: WO 2022/269733

(57) **Abstract**

A validation method determining device (1) includes a data acquiring unit (11) to acquire training data to be used for training of a predictor and test data to be used for measurement of prediction accuracy of the predictor, a validation method recommending unit (12) to recommend a validation method for extracting the training data and validation data corresponding to a prediction target using data type information indicating data types of the training data, the test data, and column data constituting both the data, and a validation method determining unit (13) to determine a validation method to be used for estimation of prediction performance of the predictor from a recommended validation method.

## Description

### TECHNICAL FIELD

The present disclosure relates to a validation method determining device and a validation method determining method.

### BACKGROUND ART

For a predictor created by machine learning, it is required to estimate its prediction performance before actual operation. For example, training data and test data are extracted from data in which a correct value of a prediction target is already known, the training data and validation data are further extracted, and prediction performance of the predictor learned using the training data is estimated using the validation data.

In addition, as a method for estimating prediction performance of a predictor, hold-out verification and cross validation are known. For example, Non Patent Literature 1 describes cross validation.

### CITATION LIST

### NON PATENT LITERATURE

Non Patent Literature 1: M. Stone, "Cross-Validatory Choice and Assessment of Statistical Predictions", Journal of the Royal Statistical Society. Series B (Methodological), Vol. 36, No. 2, pp. 111-147, 1974.

### SUMMARY OF INVENTION

### TECHNICAL PROBLEM

In a conventional technique for estimating the prediction performance of a predictor, there is a problem that, in a case where the validation data is randomly extracted, there is a possibility that validation data suitable for estimating the prediction performance of the predictor may not be obtained.

For example, in a case where the validation data is randomly extracted, test data of an unknown category that is not included in the training data and the validation data may be generated. In this case, the prediction performance of the predictor for the unknown category of the test data cannot be estimated using the validation data. A predictor whose prediction performance cannot be correctly estimated significantly deteriorates its prediction accuracy in an operation stage.

The present disclosure solves the above problem, and an object thereof is to obtain a validation method determining device and a validation method determining method capable of obtaining validation data suitable for estimation of prediction performance of a predictor.

### SOLUTION TO PROBLEM

A validation method determining device according to the present disclosure includes: a data acquiring unit to acquire training data to be used for training of a predictor and test data to be used for measurement of prediction accuracy of the predictor; a validation method recommending unit to perform recommendation of a validation method for extracting the training data and validation data corresponding to a prediction target using the training data, the test data, and data type information indicating data types of column data constituting the training data and the test data; and a validation method determining unit to determine a validation method to be used for estimation of prediction performance of the predictor from a validation method obtained by the recommendation.

### ADVANTAGEOUS EFFECTS OF INVENTION

According to the present disclosure, a validation method for extracting training data and validation data corresponding to a prediction target is recommended using training data, test data, and data type information indicating a data type of column data constituting the training data and the test data, and a validation method to be used for estimation of prediction performance of a predictor is determined from the recommended validation method.

Since the validation method determining device according to the present disclosure can determine a validation method for extracting validation data corresponding to a prediction target, it is possible to obtain validation data suitable for estimation of prediction performance of a predictor.

### BRIEF DESCRIPTION OF DRAWINGS

FIG. 1 is a block diagram illustrating a configuration of a validation method determining device according to a first embodiment.
FIG. 2 is a diagram illustrating an example of log data.
FIG. 3 is a flowchart illustrating a validation method determining method according to the first embodiment.
FIG. 4 is a flowchart illustrating a recommendation processing example (1) of a validation method in the first embodiment.
FIG. 5 is a flowchart illustrating a recommendation processing example (2) of a validation method in the first embodiment.
FIG. 6 is a concept diagram illustrating data divided into training data and validation data in such a manner that rates of the training labels are the same and training labels do not overlap in a 3-fold cross validation.
FIG. 7 is a concept diagram illustrating data divided into the training data and the validation data in such a manner that the rates of training labels are the same and the training labels overlap in the 3-fold cross validation.
FIG. 8 is a concept diagram illustrating data divided into the training data and the validation data in units of groups in the 3-fold cross validation.
FIG. 9 is a graph illustrating the number of pieces of data of the training data and test data in column data to which a building ID is assigned.
FIG. 10 is a graph illustrating the number of pieces of data of the training data and the test data in the column data to which the building ID is assigned, and an extraction example (1) of the validation data.
FIG. 11 is a graph illustrating the number of pieces of data of the training data and the test data in the column data to which the building ID is assigned, and an extraction example (2) of the validation data.
FIG. 12 is a flowchart illustrating a recommendation processing example (3) of a validation method.
FIG. 13 is a concept diagram illustrating data obtained by sorting numerical data of target columns in ascending order and dividing the numerical data into the training data and the validation data in the 3-fold cross validation.
FIG. 14 is a concept diagram illustrating data obtained by sorting numerical data accompanied by periodicity of a target column in ascending order and dividing the numerical data into the training data and the validation data in the 3-fold cross validation.
FIGS. 15A and 15B are block diagrams illustrating a hardware configuration that implements the functions of the validation method determining device according to the first embodiment.
FIG. 16 is a block diagram illustrating a configuration of a validation method determining device according to a second embodiment.
FIG. 17 is a flowchart illustrating a validation method determining method according to the second embodiment.
FIG. 18 is a flowchart illustrating a recommendation processing example (1) of a validation method in the second embodiment.
FIG. 19 is a flowchart illustrating a recommendation processing example (2) of a validation method in the second embodiment.
FIG. 20 is a flowchart illustrating a recommendation processing example (3) of a validation method in the second embodiment.

### DESCRIPTION OF EMBODIMENTS

### First Embodiment

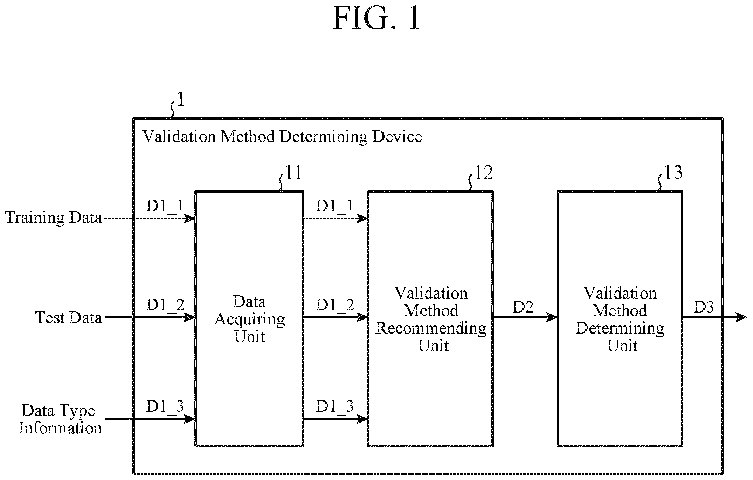

FIG. 1 is a block diagram illustrating a configuration of a validation method determining device 1 according to a first embodiment. In FIG. 1, the validation method determining device 1 generates recommendation information D2 indicating a validation method for extracting training data and validation data corresponding to a prediction target, using training data D1_1, test data D1_2, and data type information D1_3. The validation method determining device 1 determines a validation method to be used for estimation of prediction performance of a predictor from the validation method indicated by the recommendation information D2.

Information D3 indicating the validation method determined by the validation method determining device 1 is output to a validation device (not illustrated in FIG. 1). The validation device acquires validation data from the training data D1_1 according to the validation method indicated by the information D3, and estimates the prediction performance of the predictor using the acquired validation data. Note that the predictor is trained using the training data D1_1.

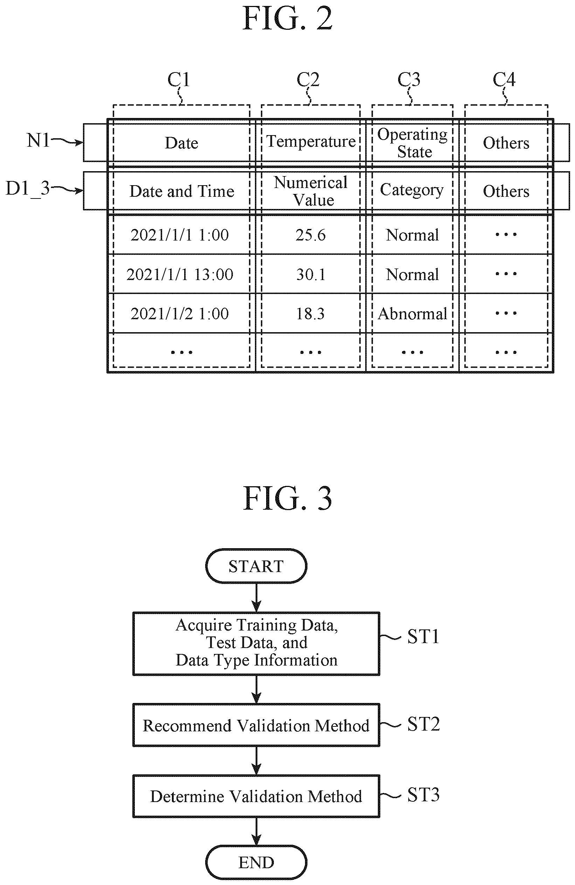

The training data D1_1 and the test data D1_2 are extracted from, for example, log data related to a case of a prediction target. FIG. 2 is a diagram illustrating an example of log data. The log data is a set of data in which a correct value of the prediction target is already known, and formed by column data. The column data is a set of data for each feature amount included in the log data.

The log data illustrated in FIG. 2 includes pieces of column data C1 to C4, and each of the pieces of column data C1 to C4 is a set of data for each feature amount indicated by a feature amount name N1. In FIG. 2, the feature amount name N1 is "date", "temperature", "operating state", and "others".

The training data D1_1 and the test data D1_2 are extracted from the log data. Thus, each of the training data D1_1 and the test data D1_2 includes column data. The data type information D1_3 is information indicating a data type of each piece of column data as a data set. For example, in the log data illustrated in FIG. 2, the data type information D1_3 includes "date and time", "numerical value", "category", and "others" as data types.

The date and time data indicates date and time related to a case. For example, the column data C1 corresponding to the feature amount "date" is a data set whose data type is "date and time". As illustrated in FIG. 2, the data in which the feature amount is "date" and the data type is "date and time" includes data indicating date and time such as "2021/1/11 1:00" and "2021/1/11 13:00".

The numerical data is a quantitative variable or quantitative data. For example, the column data C2 corresponding to the feature amount "temperature" is a data set whose data type is "numerical value". As illustrated in FIG. 2, the data in which the feature amount is "temperature" and the data type is "numerical value" includes data indicating temperatures such as "25.6" and "30.1".

The category data is a qualitative variable or qualitative data. For example, the column data C3 corresponding to the feature amount "operating state" is a data set whose data type is "category". As illustrated in FIG. 2, the data of which the feature amount is "operating state" and the data type is "category" includes data indicating "normal" and "abnormal". The others data is data that does not correspond to any of the date and time, the numerical value, and the category. For example, the column data C4 corresponding to the feature amount "others" is a data set whose data type is "others".

As illustrated in FIG. 1, the validation method determining device 1 includes a data acquiring unit 11, a validation method recommending unit 12, and a validation method determining unit 13.

FIG. 3 is a flowchart illustrating the validation method determining method according to the first embodiment, and illustrates a series of operations performed by the data acquiring unit 11, the validation method recommending unit 12, and the validation method determining unit 13. The data acquiring unit 11 acquires the training data D1_1, the test data D1_2, and the data type information D1_3 (step ST1). The training data D1_1 and the test data D1_2 are, for example, data extracted from the log data illustrated in FIG. 2.

The training data D1_1 is a set of data to be used for training of the predictor. The test data D1_2 is a set of tests to be used to measure prediction accuracy of the predictor learned using the training data D1_1. The data type information D1_3 is information indicating the data type of the column data constituting the training data D1_1 and the test data D1_2.

For example, the data acquiring unit 11 acquires the training data D1_1, the test data D1_2, and the data type information D1_3 from a validation device provided separately from the validation method determining device 1. The training data D1_1, the test data D1_2, and the data type information D1_3 acquired by the data acquiring unit 11 are output to the validation method recommending unit 12.

Subsequently, the validation method recommending unit 12 recommends one or a plurality of validation method(s) for extracting validation data corresponding to the prediction target from the training data on the basis of the training data D1_1, the test data D1_2, and the data type information D1_3 (step ST2). The recommendation information D2 indicating the validation method(s) recommended by the validation method recommending unit 12 is output to the validation method determining unit 13.

The validation method determining unit 13 determines a validation method to be used for estimation of prediction performance of the predictor from the validation method(s) recommended by the validation method recommending unit 12 (step ST3). For example, the validation method determining unit 13 determines whether or not to use the validation method(s) indicated by the recommendation information D2, and outputs the information D3 indicating the validation method determined to be used for estimation of the prediction performance of the predictor to an external device (for example, a validation device). The validation device is a device that estimates prediction performance of a predictor using validation data.

For example, the validation method recommending unit 12 orders the column data in the training data D1_1, the order indicating the ranking of the recommendation of the validation method(s), on the basis of the data type information D1_3. When the training data C1_1 is training data extracted from the log data illustrated in FIG. 2, the validation method recommending unit 12 generates the recommendation information D2 in the order of, for example, the column data C1 of "date", the column data C2 of "temperature", the column data C3 of "operating state", and the column data C4 of "others".

When the validation method determining unit 13 does not use the validation method indicated by the recommendation information D2 regarding the column data C1 of the "date" for estimating the prediction performance of the predictor, the validation method recommending unit 12 generates the recommendation information D2 regarding the next column data C2 of the "temperature" and outputs the recommendation information D2 to the validation method determining unit 13. The validation method determining device 1 repeats such a process until the validation method determining unit 13 determines a validation method to be used for estimation of prediction performance of a predictor.

Note that, when the recommendation information D2 regarding the column data has not been generated, that is, when the validation method cannot be recommended using the column data, the validation method recommending unit 12 proceeds to processing of generating the recommendation information D2 regarding the next column data. For example, the ordering of the column data is performed on the basis of a rule set in advance in the validation method recommending unit 12.

As the rule, an order set in advance for each piece of column data is used. In addition, the rule may define an order in accordance with the data type of the column data. For example, the rule may prioritize column data of qualitative data, or may prioritize column data of quantitative data.

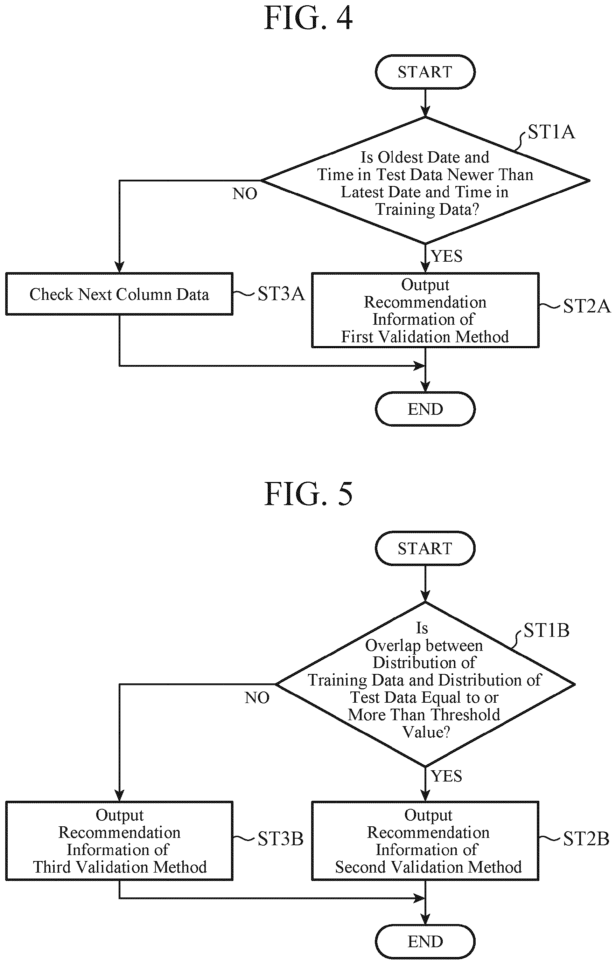

FIG. 4 is a flowchart illustrating a recommendation processing example (1) of the validation method in the first embodiment, and illustrates an example of processing by the validation method recommending unit 12.

The validation method recommending unit 12 extracts the column data C1 whose data type is "date and time" from the training data D1_1 and the test data D1_2 using the data type information D1_3. Next, the validation method recommending unit 12 determines whether or not the oldest date and time included in the column data C 1 of the test data D1_2 is newer than the latest date and time included in the column data C1 of the training data D1_1 (step ST1A).

When the oldest date and time included in the column data C1 of the test data D1_2 is newer than the latest date and time included in the column data C1 of the training data D1_1 (step ST1A; YES), the validation method recommending unit 12 generates the recommendation information D2 indicating a first validation method, and outputs the recommendation information D2 to the validation method determining unit 13 (step ST2A).

On the basis of a distribution difference between the training data D1_1 and the test data D1_2 in the column data C1 of date and time, the validation method recommending unit 12 recommends a validation method for extracting the training data D1_1 and the validation data in such a manner that the time-series order relation between the training data D1_1 and the validation data is maintained. For example, the validation method recommending unit 12 recommends, as the first validation method, a validation method for using past data in time series in the training data D1_1 for training of the predictor and extracting future data in time series as validation data.

When it is determined that the oldest date and time included in the column data C1 of the test data D1_2 is older than the latest date and time included in the column data C1 of the training data D1_1 or both dates and times are the same (step ST1A; NO), the validation method recommending unit 12 checks the next column data as a target for recommendation processing of the validation method (step ST3A). Thus, validation method recommendation processing for the column data C2 is performed.

FIG. 5 is a flowchart illustrating a recommendation processing example (2) of the validation method in the first embodiment, and illustrates an example of processing by the validation method recommending unit 12.

The validation method recommending unit 12 extracts the column data C3 whose data type is "category" from the training data D1_1 and the test data D1_2 using the data type information D1_3. Next, the validation method recommending unit 12 determines whether or not the overlap between the distribution of the training data D 1_1 and the distribution of the test data D1_2 in the column data C3 is equal to or more than a threshold value (step ST1B). In the portion where the distributions overlap, the training data D1_1 and the test data D1_2 include the same data.

When it is determined that the overlap between the distribution of the training data D1_1 and the distribution of the test data D1_2 is equal to or more than the threshold value (step ST1B; YES), the validation method recommending unit 12 generates the recommendation information D2 indicating a second validation method, and outputs the recommendation information D2 to the validation method determining unit 13 (step ST2B). For example, the validation method recommending unit 12 recommends, as the second validation method, a validation method for extracting the training data D1_1 and the validation data in such a manner that the rates of training labels are the same.

In addition, when the overlap between the distribution of the training data D1_1 and the distribution of the test data D1_2 is less than the threshold value (step ST1B; NO), the validation method recommending unit 12 generates the recommendation information D2 indicating a third validation method, and outputs the recommendation information D2 to the validation method determining unit 13 (step ST3B). For example, the validation method recommending unit 12 recommends, as the third validation method, a validation method for extracting the training data D1_1 and the validation data in units of groups. A group is a set of data organized by attributes or rules.

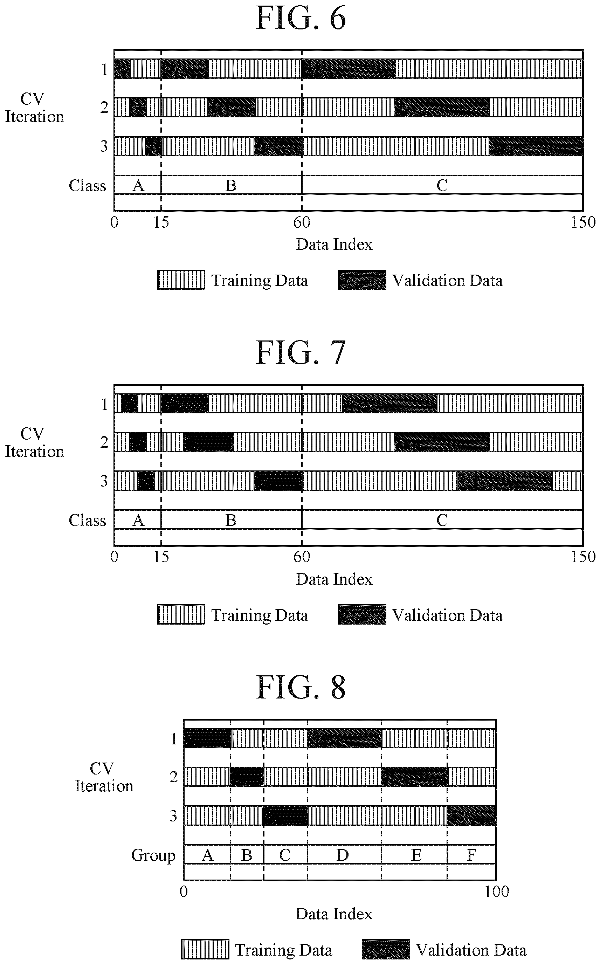

For example, a validation method for dividing data into training data D1_1 and validation data in such a manner that the rates of the training labels are the same in the 3-fold (k = 3) cross validation will be described. FIG. 6 is a concept diagram illustrating data divided into the training data D1_1 and the validation data in such a manner that the rates of the training labels are the same and the training labels do not overlap in the 3-fold cross validation. FIG. 7 is a concept diagram illustrating data divided into the training data D1_1 and the validation data in such a manner that the rates of the training labels are the same and the training labels overlap in the 3-fold cross validation.

FIGS. 6 and 7 assume that a task of machine learning is a classification problem, and there are three types of training labels (classification classes) A, B, and C. Pieces of data corresponding to respective three iterations in the 3-fold cross validation (CV) are 150 data sets given data indexes. Among classes A, B, and C, 15 pieces of data belong to the class A, 45 pieces of data belong to the class B, and 90 pieces of data belong to the class C.

As illustrated in FIGS. 6 and 7, the data used in each of the first iteration, the second iteration, and the third iteration has the same ratio of training labels of class A: class B : class C = 1 : 3 : 6. The 15 data sets belonging to the class A, the 45 data sets belonging to the class B, and the 90 data sets belonging to the class C are divided into training data and validation data. The validation method for performing these processes is the second validation method.

In the data used in each of the first iteration, the second iteration, and the third iteration in FIG. 6, there is no overlap of the data index and there is no overlap of the training label. On the other hand, in the data used in each of the first iteration, the second iteration, and the third iteration in FIG. 7, there is data having overlapping data indexes and overlapping training labels.

FIG. 8 is a concept diagram illustrating data divided into training data and validation data in units of groups in the 3-fold cross validation. The data illustrated in FIG. 8 is assumed to be column data divided into six groups A to F, and is a data set of 100 pieces. In order to perform the 3-fold cross validation, data used in each of the first iteration, the second iteration, and the third iteration is divided into training data and validation data.

The validation method recommending unit 12 recommends a third validation method for dividing data into training data and validation data in units of groups in such a manner that data belonging to a certain group is not divided into training data and validation data. For example, in data of a group A, data used in the first iteration is set as validation data, and data used in the second iteration and data used in the third iteration are set as training data. The validation method for performing these processes is the third validation method.

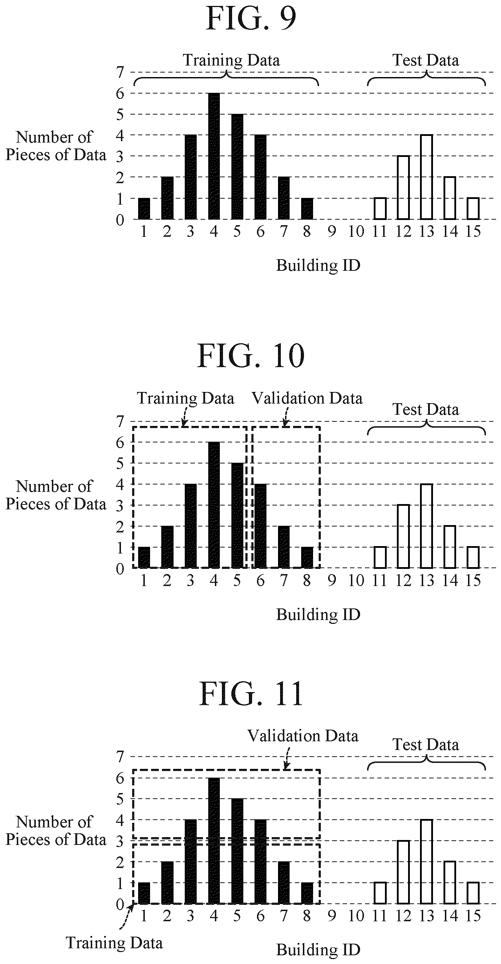

FIG. 9 is a graph illustrating the number of pieces of data of the training data and the test data in the column data to which a building ID is assigned. The data illustrated in FIG. 9 is data assuming a task of predicting a power value consumed in a plurality of buildings, and includes column data to which the building ID is assigned. The graph of FIG. 9 illustrates the distribution of the training data and the distribution of the test data in the column data to which the building ID is assigned. The building ID corresponds to the group described above.

In FIG. 9, no building ID overlaps between the distribution of the training data and the distribution of the test data. Thus, the task using the training data and the test data illustrated in FIG. 9 is a task of predicting the power consumption value in an unknown building that does not exist in the training data.

FIG. 10 is a graph illustrating the number of pieces of data of the training data and the test data in the column data to which the building ID is assigned and an extraction example (1) of the validation data. As illustrated in FIG. 10, the validation data is extracted from the training data in such a manner that no building ID overlaps between the training data and the validation data. This validation method is the third validation method. Since the validation data extracted by the third validation method has no building ID overlaps with those of the training data, it is possible to appropriately estimate the general-purpose capability of the predictor.

FIG. 11 is a graph illustrating the number of pieces of data of the training data and the test data in the column data to which the building ID is assigned and an extraction example (2) of the validation data. As illustrated in FIG. 11, the validation data is extracted from the training data in a state where the building ID overlaps between the training data and the validation data. If the validation data having a building ID overlapping with that of the training data is used, it is not possible to correctly estimate the general-purpose capability of the predictor.

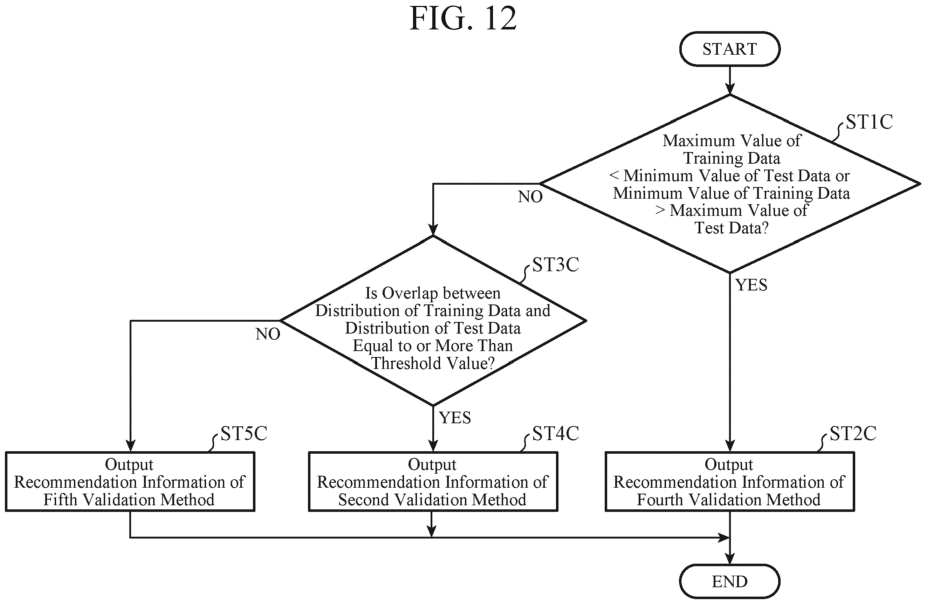

FIG. 12 is a flowchart illustrating a recommendation processing example (3) of the validation method, and illustrates an example of processing by the validation method recommending unit 12.

The validation method recommending unit 12 extracts the column data C2 whose data type is "numerical value" from the training data D1_1 and the test data D1_2 using the data type information D1_3. Subsequently, the validation method recommending unit 12 determines whether or not the maximum value of the training data D1_1 in the column data C2 is smaller than the minimum value of the test data D 1_2 or whether or not the minimum value of the training data D1_1 is larger than the maximum value of the test data D1_2 (step ST1C).

When it is determined that the maximum value of the training data D1_1 is smaller than the minimum value of the test data D1_2 or the minimum value of the training data D1_1 is larger than the maximum value of the test data D1_2 (step ST1C; YES), the validation method recommending unit 12 generates the recommendation information D2 indicating a fourth validation method, and outputs the recommendation information D2 to the validation method determining unit 13 (step ST2C). For example, the validation method recommending unit 12 recommends, as the fourth validation method, a validation method for extracting the training data D1_1 and the validation data in such a manner that a magnitude relationship between the training data D1_1 and the test data D1_2 is maintained.

When it is determined that the maximum value of the training data D1_1 is equal to or more than the minimum value of the test data D1_2 or that the minimum value of the training data D1_1 is equal to or less than the maximum value of the test data D1_2 (step ST1C; NO), the validation method recommending unit 12 determines whether or not the overlap between the distribution of the training data D1_1 and the distribution of the test data D 1_2 in the column data C2 is equal to or more than a threshold value (step ST3C).

When it is determined that the overlap between the distribution of the training data D1_1 and the distribution of the test data D1_2 is equal to or more than the threshold value (step ST3C; YES), the validation method recommending unit 12 generates the recommendation information D2 indicating the second validation method, and outputs the recommendation information D2 to the validation method determining unit 13 (step ST4C). The second validation method is a validation method of extracting the training data D1_1 and the validation data in such a manner that the rates of the training labels are the same.

When it is determined that the overlap between the distribution of the training data D1_1 and the distribution of the test data D1_2 is less than the threshold value (step ST3C; NO), the validation method recommending unit 12 generates the recommendation information D2 indicating a fifth validation method, and outputs the recommendation information D2 to the validation method determining unit 13 (step ST4C). For example, the validation method recommending unit 12 recommends, as the fifth validation method, a validation method for extracting the training data D1_1 and the validation data in such a manner that a localization relationship between the training data D1_1 and the test data D1_2 is maintained.

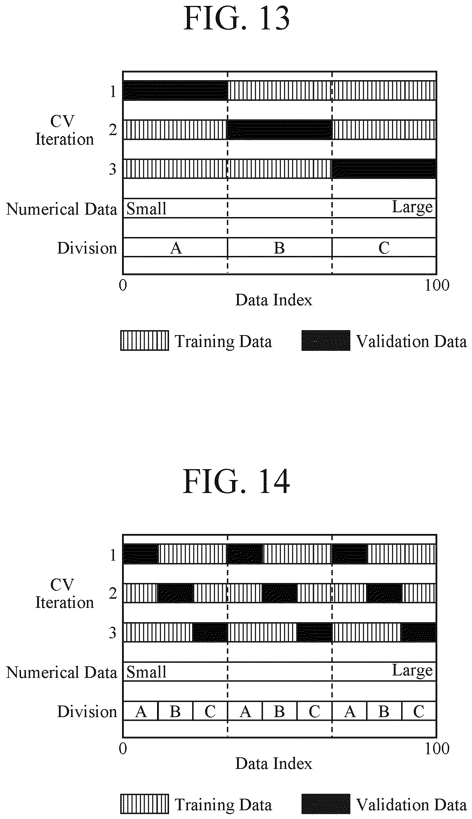

FIG. 13 is a concept diagram illustrating data obtained by sorting numerical data of the target column in ascending order and dividing the data into training data and validation data in the 3-fold cross validation. There is assumed a task of predicting an objective variable in a temperature range other than the temperature range of interest when numerical data is "temperature", a temperature range such as low temperature (less than 0°), normal (0° or more and less than 40°), and high temperature (40° or more) is set, and it is the temperature range of interest.

As illustrated in FIG. 13, a validation method for dividing numerical data into a small region and a large region is suitable for the task described above. That is, in the training data and the test data, data having a small numerical value is localized in a "small" region having a small data index value, data having a large numerical value is localized in a "large" region having a large data index value, and data having an intermediate numerical value is localized between the "small" region and the "large" region. As the fifth validation method, the validation method recommending unit 12 recommends a validation method for extracting the training data D1_1 and the validation data in such a manner that the localization relationship between the training data D1_1 and the test data D1_2 is maintained.

For example, in data used in each of the first iteration, the second iteration, and the third iteration, numerical data in a region having a small numerical value is divided into data belonging to the class A which is a training label, the first iteration is set as validation data, and the second and third iterations are set as training data.

Numerical data that is an intermediate region between a region having a small numerical value and a region having a large numerical value is divided into data belonging to the class B, and the first and third iterations are set as training data, and the second iteration is used as validation data.

Numerical data of a region having a large numerical value is divided into data belonging to the class C, and the first and second iterations are used as training data, and the third iteration is used as validation data.

FIG. 14 is a concept diagram illustrating data obtained by sorting numerical data with periodicity of a target column in ascending order and dividing the numerical data into training data and validation data in the 3-fold cross validation. As illustrated in FIG. 14, when it is numerical data in which different data sets periodically appear in a first half portion, an intermediate portion, and a second half portion, a validation method of dividing a set of numerical data localized in a region of the first half portion, a region of the intermediate portion, and a region of the second half portion within a period into classes A to C is suitable.

For example, in data used in each of the first iteration, the second iteration, and the third iteration, numerical data in a region having a small numerical value is divided into data belonging to the classes A to C in accordance with periodicity, numerical data that is an intermediate region between the region having a small numerical value and a region having a large numerical value is divided into data belonging to the classes A to C in accordance with periodicity, and numerical data in the region having a large numerical value is divided into data belonging to the classes A to C in accordance with periodicity.

In addition, in the data used in the first iteration, data belonging to the class A is set as validation data, and data belonging to the class B and the class C is set as training data. In the data used in the second iteration, data belonging to the class A and the class C is set as training data, and data belonging to the class B is set as validation data. In the data used in the third iteration, data belonging to the class A and the class B is set as training data, and data belonging to the class C is set as validation data.

The validation method determining unit 13 determines whether or not to use the validation method recommended by the validation method recommending unit 12 on the basis of the recommendation information D2. As a criterion for determining the validation method, a rule set in the validation method determining unit 13 may be used. For example, when the training data D1_1 and the test data D1_2 are of a specific data type, the validation method determining unit 13 may use a rule defining a condition that a recommended validation method is always determined to be used.

Furthermore, when the recommended validation method is not used by the validation method determining unit 13, the validation method recommending unit 12 may exclude a feature amount of column data column used to specify this validation method from the recommendation processing of the validation method.

The functions of the data acquiring unit 11, the validation method recommending unit 12, and the validation method determining unit 13 in the validation method determining device 1 are implemented by a processing circuit.

That is, the validation method determining device 1 includes a processing circuit for executing each processing of steps ST1 to ST3 illustrated in FIG. 3. The processing circuit may be dedicated hardware, or may be a central processing unit (CPU) that executes a program stored in a memory.

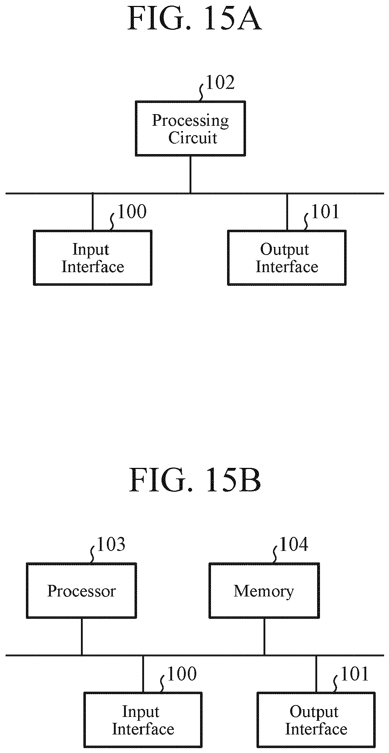

FIG. 15A is a block diagram illustrating a hardware configuration that implements the functions of the validation method determining device 1. FIG. 15B is a block diagram illustrating a hardware configuration for executing software for implementing the functions of the validation method determining device 1. In FIGS. 15A and 15B, the input interface 100 is an interface that relays the training data D1_1, the test data D1_2, and the data type information D1_3 output from the external device to the validation method determining device 1. The output interface 101 is an interface that relays the information D3 output from the validation method determining device 1 to a validation device (not illustrated).

In a case where the processing circuit is the processing circuit 102 of dedicated hardware illustrated in FIG. 15A, the processing circuit 102 corresponds to, for example, a single circuit, a composite circuit, a programmed processor, a parallel programmed processor, an application specific integrated circuit (ASIC), a field-programmable gate array (FPGA), or a combination thereof. The functions of the data acquiring unit 11, the validation method recommending unit 12, and the validation method determining unit 13 in the validation method determining device 1 may be implemented by separate processing circuits, or these functions may be implemented by one processing circuit.

In a case where the processing circuit is the processor 103 illustrated in FIG. 15B, the functions of the data acquiring unit 11, the validation method recommending unit 12, and the validation method determining unit 13 in the validation method determining device 1 are implemented by software, firmware, or a combination of software and firmware. Note that software or firmware is described as a program and stored in a memory 104.

The processor 103 implements the functions of the data acquiring unit 11, the validation method recommending unit 12, and the validation method determining unit 13 in the validation method determining device 1 by reading and executing the program stored in the memory 104.

For example, the validation method determining device 1 includes the memory 104 for storing a program that results in execution of each processing from step ST1 to step ST3 in the flowchart illustrated in FIG. 3 when executed by the processor 103. These programs cause a computer to execute procedures or methods of processing performed by the data acquiring unit 11, the validation method recommending unit 12, and the validation method determining unit 13. The memory 104 may be a computer-readable storage medium storing a program for causing a computer to function as the data acquiring unit 11, the validation method recommending unit 12, and the validation method determining unit 13.

The memory 104 corresponds to, for example, a nonvolatile or volatile semiconductor memory such as a random access memory (RAM), a read only memory (ROM), a flash memory, an erasable programmable read only memory (EPROM), or an electrically-EPROM (EEPROM), a magnetic disk, a flexible disk, an optical disk, a compact disk, a mini disk, or a DVD.

A part of the functions of the data acquiring unit 11, the validation method recommending unit 12, and the validation method determining unit 13 in the validation method determining device 1 may be implemented by dedicated hardware, and a part thereof may be implemented by software or firmware.

For example, the functions of the data acquiring unit 11 is implemented by the processing circuit 102 that is dedicated hardware, and the functions of the validation method recommending unit 12 and the validation method determining unit 13 are implemented by the processor 103 reading and executing a program stored in the memory 104. As described above, the processing circuit can implement the above functions by hardware, software, firmware, or a combination thereof.

As described above, the validation method determining device 1 according to the first embodiment recommends a validation method for extracting training data and validation data corresponding to the prediction target using the training data D1_1, the test data D1**_**2, and the data type information D1_3, and determines a validation method to be used for estimation of prediction performance of a predictor from the recommended validation method. Conventionally, know-how is required to obtain validation data suitable for estimation of prediction performance of a predictor, and it has been difficult to appropriately extract the validation data.

On the other hand, since the validation method determining device 1 can determine a validation method for extracting validation data corresponding to a prediction target, it is possible to obtain validation data suitable for estimation of prediction performance of a predictor without requiring special know-how.

Also in the validation method determining method according to the first embodiment, a similar effect can be obtained.

In the validation method determining device 1 according to the first embodiment, the validation method recommending unit 12 recommends a validation method for extracting training data and validation data in such a manner that a time-series order relationship between the training data and the validation data is maintained. For example, it is possible to obtain validation data suitable for estimation of prediction performance of a predictor whose prediction target is date and time data.

In the validation method determining device 1 according to the first embodiment, the validation method recommending unit 12 recommends a validation method for extracting training data and validation data in such a manner that the rates of the training labels are the same. For example, it is possible to obtain validation data suitable for estimation of prediction performance of a predictor whose prediction target is qualitative data.

In the validation method determining device 1 according to the first embodiment, the validation method recommending unit 12 recommends a validation method for extracting training data and validation data in units of groups. For example, it is possible to obtain validation data suitable for estimation of prediction performance of a predictor whose prediction target is qualitative data.

In the validation method determining device 1 according to the first embodiment, the validation method recommending unit 12 recommends a validation method for extracting training data and validation data in such a manner that a magnitude relationship between the training data D1_1 and the test data D1_2 is maintained. For example, it is possible to obtain validation data suitable for estimation of prediction performance of a predictor whose prediction target is numerical data.

In the validation method determining device 1 according to the first embodiment, the validation method recommending unit 12 recommends a validation method for extracting training data and validation data in such a manner that the localization relationship between the training data D1_1 and the test data D1_2 is maintained. For example, it is possible to obtain validation data suitable for estimation of prediction performance of a predictor whose prediction target is numerical data.

### Second Embodiment

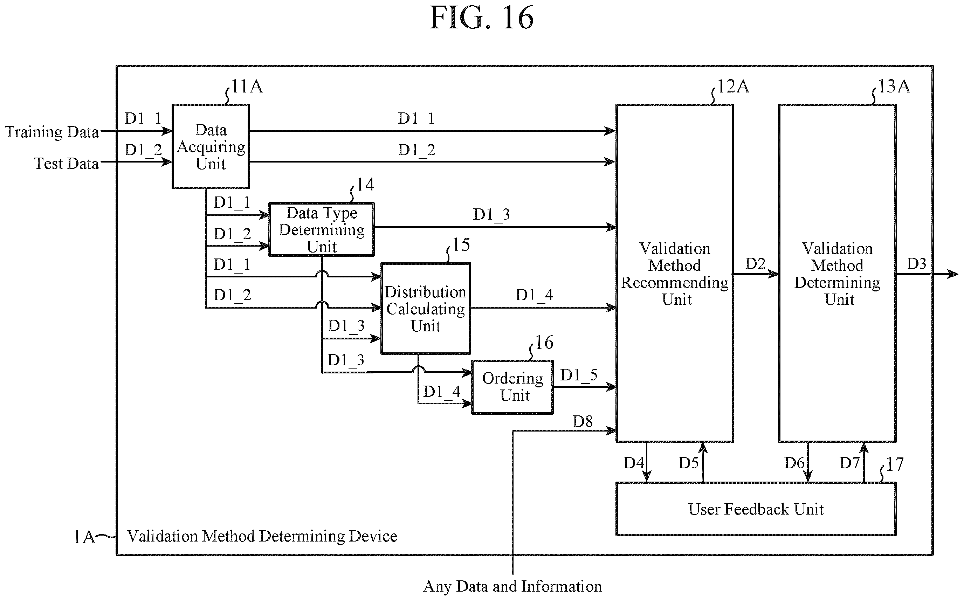

FIG. 16 is a block diagram illustrating a configuration of a validation method determining device 1A according to a second embodiment. In FIG. 16, the validation method determining device 1A includes a data acquiring unit 11A, a validation method recommending unit 12A, a validation method determining unit 13A, a data type determining unit 14, a distribution calculating unit 15, an ordering unit 16, and a user feedback unit 17. The data acquiring unit 11A acquires the training data D1_1 and the test data D1_2, and outputs the acquired training data D1_1 and test data D1_2 to the validation method recommending unit 12A and the data type determining unit 14.

The validation method recommending unit 12A recommends a validation method for extracting training data and validation data by using the training data D1_1 and the test data D1_2 acquired by the data acquiring unit 11A, the data type information D1_3 generated by the data type determining unit 14, distribution information D1_4 calculated by the distribution calculating unit 15, and order information D1_5 calculated by the ordering unit 16. The recommendation information D2 indicating the validation method recommended by the validation method recommending unit 12A is output to the validation method determining unit 13A. Furthermore, the validation method recommending unit 12A may further recommend a validation method using any data and information D8.

The validation method determining unit 13A determines whether or not to use the validation method indicated by the recommendation information D2 for estimation of prediction performance of a predicted value on the basis of feedback information D7 from the user feedback unit 17. The validation method determining unit 13A outputs the information D3 indicating the validation method determined to be used for estimation of the prediction performance of a predictor to an external device (for example, a validation device (not illustrated in FIG. 16)).

The data type determining unit 14 generates the data type information D1_3 using the training data D1_1 and the test data D1_2 acquired from the data acquiring unit 11A to determine the data type of the column data constituting these data. For example, the data type determining unit 14 generates the data type information D1_3 on the basis of the data type or the number of elements of the column data of the training data D1_1 and the test data D1_2.

The distribution calculating unit 15 calculates a difference between the distribution of the training data D1_1 and the distribution of the test data D 1_2, generates distribution information indicating the calculated distribution difference, and outputs the distribution information to the validation method recommending unit 12A. For example, the distribution calculating unit 15 calculates the distribution information D1_4 on the basis of the degree of overlap between the distribution of the training data D1_1 and the distribution of the test data D1_2 in the column data or a Euclidean distance of the numerical data.

The ordering unit 16 orders the column data from which the validation data is extracted using the data type information D1_3 and the distribution information D1_4, and outputs the order information D1_5 indicating the order of the column data to the validation method recommending unit 12A. For example, the ordering unit 16 may perform ordering based on whether or not the degree of overlapping of the distributions of the training data D1_1 and the test data D1_2 is equal to or more than a threshold value, may perform ordering based on whether or not the Euclidean distance of the numerical data is equal to or more than a threshold value, or may perform ordering based on a combination thereof. Furthermore, the ordering unit 16 may perform ordering on the basis of one piece of distribution information D1_4 for the training data D1_1 and the test data D1_2 or perform ordering on the basis of a plurality of pieces of distribution information D1_4.

The user feedback unit 17 is a feedback unit that outputs presentation information D4 regarding the recommendation of the validation method and outputs feedback information D5 for the presentation information D4 to the validation method recommending unit 12A. The validation method recommending unit 12A recommends a validation method in accordance with the feedback information D5. Furthermore, the user feedback unit 17 outputs presentation information D6 regarding the determination of the validation method, and outputs the feedback information D7 for the presentation information D6 to the validation method determining unit 13A. The validation method determining unit 13A determines whether or not to use the recommended validation method for estimating the prediction performance of the predictor on the basis of the feedback information D7.

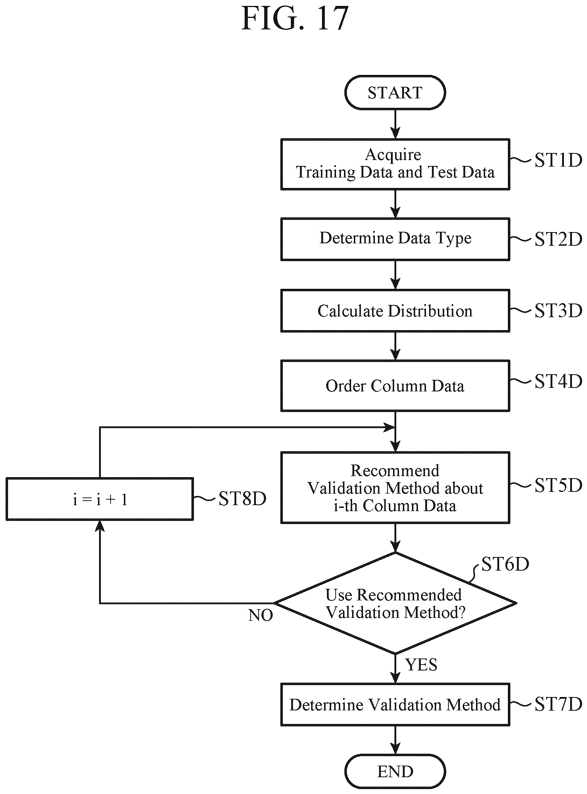

FIG. 17 is a flowchart illustrating a validation method determining method according to the second embodiment, and illustrates a series of processing by the validation method determining device 1A.

The data acquiring unit 11A acquires training data D1_1 and test data D1_2 (step ST1D). The data acquiring unit 11A outputs each of the training data D1_1 and the test data D1_2 to the validation method recommending unit 12A, the data type determining unit 14, and the distribution calculating unit 15.

The data type determining unit 14 determines the data type of the column data constituting these data (step ST2D) using the training data D1_1 and the test data D1_2. The data type determining unit 14 outputs the data type information D1_3 indicating the data type of the determination result to the distribution calculating unit 15 and the ordering unit 16.

The distribution calculating unit 15 calculates a distribution difference between the training data D1_1 and the test data D1_2 using the training data D1_1, the test data D1_2, and the data type information D1_3 (step ST3D). The distribution calculating unit 15 generates the distribution information D1_4 indicating the calculated distribution difference, and outputs the distribution information D1_4 to the validation method recommending unit 12A.

The ordering unit 16 orders the column data in the training data D1_1 and the test data D1_2 (step ST4D) using the data type information D1_3 and the distribution information D1_4. The ordering unit 16 outputs the order information D1_5 indicating the ordering of the column data to the validation method recommending unit 12A. For example, a parameter i indicating the order of the validation method recommendation processing is set for the column data.

The validation method recommending unit 12A performs recommendation processing of the validation method for the i-th column data (step ST5D). For example, the validation method recommending unit 12A generates the recommendation information D2 of the validation method using the data type information D 1_3 and the distribution information D1_4 for the column data having the smallest value of the parameter i (processing order) indicated by the order information D1_5, and outputs the recommendation information D2 to the validation method determining unit 13A.

Furthermore, before outputting the recommendation information D2 to the validation method determining unit 13A, the validation method recommending unit 12A may generate the presentation information D4 for allowing a user to check the validation method to be recommended, and output the presentation information D4 to the user feedback unit 17.

The user feedback unit 17 presents the presentation information D4 to the user. For example, the user feedback unit 17 outputs the presentation information D4 in a display device or a voice output device, which are not illustrated in FIG. 16.

Upon acquiring the feedback information D5 on the presentation information D4 from the user, the user feedback unit 17 outputs the feedback information D5 to the validation method recommending unit 12A. The validation method recommending unit 12A generates the recommendation information D2 indicating a validation method corresponding to the feedback information D5, and outputs the recommendation information D2 to the validation method determining unit 13A.

Next, the validation method determining unit 13A determines whether or not to use the validation method indicated by the recommendation information D2 (step ST6D). Furthermore, before determining the validation method, the validation method determining unit 13A may generate the presentation information D6 for allowing the user to check the recommended validation method, and output the presentation information D6 to the user feedback unit 17. The user feedback unit 17 presents the presentation information D6 to the user.

Upon acquiring the feedback information D7 from the user with respect to the presentation information D6, the user feedback unit 17 outputs the feedback information D7 to the validation method determining unit 13A. The validation method determining unit 13A determines whether or not to use the recommended validation method on the basis of the feedback information D7.

When it is determined to use the validation method indicated by the recommendation information D2 (step ST6D; YES), the validation method determining unit 13A determines the validation method recommended by the validation method recommending unit 12A as a validation method to be used for estimation of the prediction performance of the predictor (step ST7D). The validation method determining unit 13A outputs the information D3 indicating the validation method that has been determined to be used to an external device (for example, a validation device).

In addition, when it is determined not to use the validation method indicated by the recommendation information D2 (step ST6D; NO), the validation method determining unit 13A notifies the validation method recommending unit 12A of the determination. Upon receiving the notification, the validation method recommending unit 12A adds +1 to the parameter i (step ST8D), and repeats the processing from step ST5D on the column data in the next order. The processing from step ST5D to step ST7D is repeatedly executed until a validation method is determined.

Note that the functions of the data acquiring unit 11A, the validation method recommending unit 12A, the validation method determining unit 13A, the data type determining unit 14, the distribution calculating unit 15, the ordering unit 16, and the user feedback unit 17 in the validation method determining device 1A are implemented by the processing circuit illustrated in FIG. 15A or FIG. 15B. That is, the validation method determining device 1A includes a processing circuit for executing the processing from step ST1D to step ST8D illustrated in FIG. 17. The processing circuit may be dedicated hardware, or may be a CPU that executes a program stored in a memory.

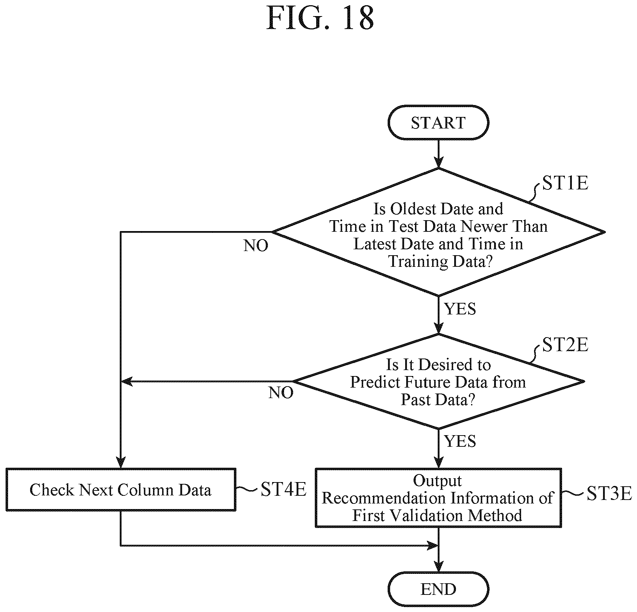

FIG. 18 is a flowchart illustrating a recommendation processing example (1) of the validation method in the second embodiment, and illustrates an example of processing by the validation method recommending unit 12A.

The validation method recommending unit 12A extracts the column data C1 whose data type is "date and time" from the training data D1_1 and the test data D1_2 using the data type information D1_3. The validation method recommending unit 12A determines whether or not the oldest date and time included in the column data C1 of the test data D1_2 is newer than the latest date and time included in the column data C1 of the training data D1_1 (step ST1E).

When the oldest date and time included in the column data C1 of the test data D1_2 is newer than the latest date and time included in the column data C1 of the training data D1_1 (step ST1E; YES), the validation method recommending unit 12A generates the presentation information D4 for inquiring the user whether "it is desired to predict future data from past data", and outputs the generated presentation information D4 to the user feedback unit 17.

The user feedback unit 17 presents the presentation information D4 to the user. Thus, the validation method recommending unit 12A determines whether or not it is desired to predict future data from past data (step ST2E). The user feedback unit 17 outputs the feedback information D5 for the presentation information D4 to the validation method recommending unit 12A.

When it is determined that the user desires to predict the future data from the past data using the feedback information D5 (step ST2E; YES), the validation method recommending unit 12A generates the recommendation information D2 indicating the first validation method, and outputs the recommendation information D2 to the validation method determining unit 13 (step ST3E).

The validation method recommending unit 12A recommends a validation method for extracting the training data D1_1 and the validation data in such a manner that the time-series order relationship between the training data D1_1 and the validation data is maintained on the basis of the distribution difference between the training data D1_1 and the test data D1_2 in the column data C1 of date and time. For example, the validation method recommending unit 12A recommends, as a first validation method, a validation method of using past data in time series in the training data D 1_1 for training of the predictor and extracting future data in time series as validation data.

When it is determined that the oldest date and time included in the column data C1 of the test data D1_2 is older than the latest date and time included in the column data C1 of the training data D1_1 or both dates and times are the same (step ST1E; NO), or when it is determined that the user does not desire to predict future data from past data (step ST2E; NO), the validation method recommending unit 12A checks the next column data as a target of the recommendation processing of the validation method (step ST4E).

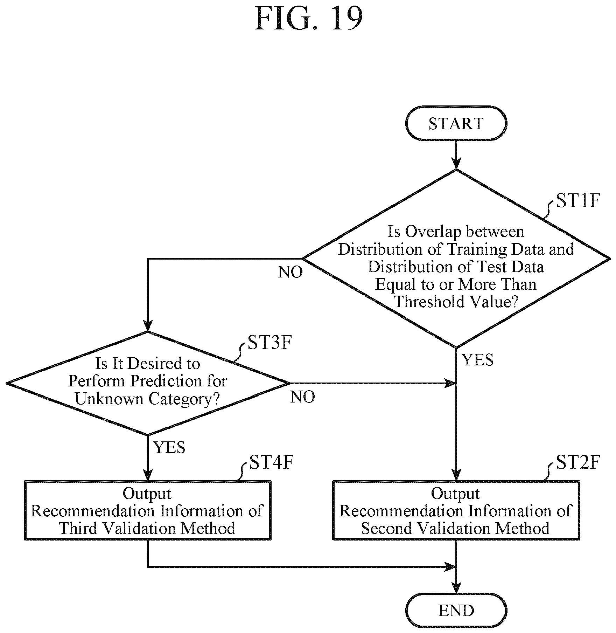

FIG. 19 is a flowchart illustrating a recommendation processing example (2) of the validation method in the second embodiment, and illustrates an example of processing by the validation method recommending unit 12A.

The validation method recommending unit 12A extracts the column data C3 whose data type is "category" from the training data D1_1 and the test data D1_2 using the data type information D1_3. Next, the validation method recommending unit 12A determines whether or not the overlap between the distribution of the training data D 1_1 and the distribution of the test data D1_2 in the column data C3 is equal to or more than a threshold value (step ST1F).

When it is determined that the overlap between the distribution of the training data D1_1 and the distribution of the test data D1_2 is equal to or more than the threshold value (step ST1F; YES), the validation method recommending unit 12A generates the recommendation information D2 indicating the second validation method, and outputs the recommendation information D2 to the validation method determining unit 13A (step ST2F). For example, the validation method recommending unit 12A recommends, as the second validation method, a validation method for extracting the training data D1_1 and the validation data in such a manner that the rates of the training labels are the same.

In addition, when the overlap between the distribution of the training data D1_1 and the distribution of the test data D1_2 is less than the threshold value (step ST1F; NO), the validation method recommending unit 12A generates the presentation information D4 for inquiring the user whether "it is desired that prediction is performed for an unknown category", and outputs the generated presentation information D4 to the user feedback unit 17.

The user feedback unit 17 presents the presentation information D4 to the user. Thus, the validation method recommending unit 12A determines whether or not it is desired that prediction is performed for an unknown category (step ST3F). The user feedback unit 17 outputs the feedback information D5 for the presentation information D4 to the validation method recommending unit 12A.

When it is determined that the user does not desire that prediction is performed for an unknown category using the feedback information D5 (step ST3F; NO), the validation method recommending unit 12A proceeds to processing of step ST2F.

When it is determined that the user desires that prediction is performed for an unknown category using the feedback information D5 (step ST3F; YES), the validation method recommending unit 12A generates the recommendation information D2 indicating the third validation method, and outputs the recommendation information D2 to the validation method determining unit 13A (step ST4F). For example, the validation method recommending unit 12A recommends, as the third validation method, a validation method for extracting the training data D1_1 and the validation data in units of groups.

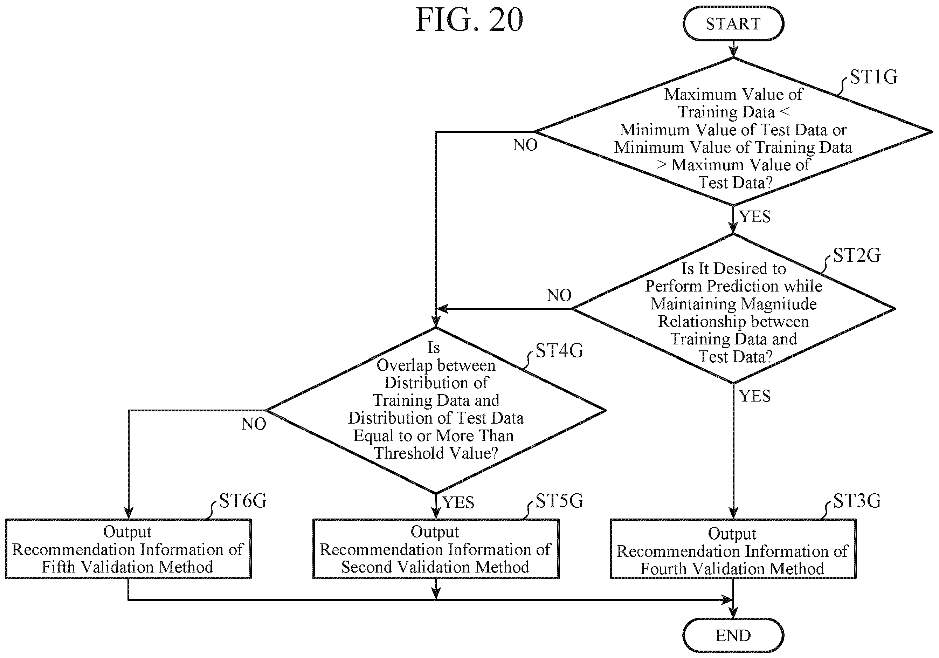

FIG. 20 is a flowchart illustrating a recommendation processing example (3) of the validation method in the second embodiment, and illustrates an example of processing by the validation method recommending unit 12A.

The validation method recommending unit 12A extracts the column data C2 having the data type of "numerical value" from the training data D1_1 and the test data D1_2 using the data type information D1_3. Subsequently, the validation method recommending unit 12A determines whether or not the maximum value of the training data D1_1 in the column data C2 is smaller than the minimum value of the test data D 1_2 or whether or not the minimum value of the training data D1_1 is larger than the maximum value of the test data D1_2 (step ST1G).

When it is determined that the maximum value of the training data D1_1 is smaller than the minimum value of the test data D1_2 or the minimum value of the training data D1_1 is larger than the maximum value of the test data D1_2 (step ST1G; YES), the validation method recommending unit 12A generates the presentation information D4 for inquiring the user whether "it is desired to predict while maintaining the magnitude relationship between the training data and the test data", and outputs the generated presentation information D4 to the user feedback unit 17.

The user feedback unit 17 presents the presentation information D4 to the user. Thus, the validation method recommending unit 12A determines whether or not it is desired to perform prediction while maintaining the magnitude relationship between the training data and the test data (step ST2G). The user feedback unit 17 outputs the feedback information D5 for the presentation information D4 to the validation method recommending unit 12A.

When it is determined that the user desires to perform prediction while maintaining the magnitude relationship between the training data and the test data using the feedback information D5 (step ST2G; YES), the validation method recommending unit 12A generates the recommendation information D2 indicating the fourth validation method, and outputs the recommendation information D2 to the validation method determining unit 13A (step ST3G). For example, the validation method recommending unit 12A recommends, as the fourth validation method, a validation method for extracting the training data D1_1 and the validation data in such a manner that a magnitude relationship between the training data D1_1 and the test data D1_2 is maintained.

When it is determined that the maximum value of the training data D1_1 is equal to or more than the minimum value of the test data D1_2 or that the minimum value of the training data D1_1 is equal to or less than the maximum value of the test data D1_2 (step ST1G; NO), or when it is determined that the user does not desire to predict while maintaining the magnitude relationship between the training data and the test data (step ST2G; NO), the validation method recommending unit 12A determines whether or not the overlap between the distribution of the training data D1_1 and the distribution of the test data D 1_2 in the column data C2 is equal to or more than a threshold value (step ST4G).

When it is determined that the overlap between the distribution of the training data D1_1 and the distribution of the test data D1_2 is equal to or more than the threshold value (step ST4G; YES), the validation method recommending unit 12A generates the recommendation information D2 indicating the second validation method, and outputs the recommendation information D2 to the validation method determining unit 13A (step ST5G). The second validation method is a validation method of extracting the training data D1_1 and the validation data in such a manner that the rates of the training labels are the same.

When it is determined that the overlap between the distribution of the training data D1**_**1 and the distribution of the test data D1_2 is less than the threshold value (step ST4G; NO), the validation method recommending unit 12A generates the recommendation information D2 indicating the fifth validation method, and outputs the recommendation information D2 to the validation method determining unit 13 (step ST6G). For example, the validation method recommending unit 12A recommends, as the fifth validation method, a validation method for extracting the training data D1_1 and the validation data in such a manner that the localization relationship between the training data D1_1 and the test data D1_2 is maintained.

Note that the validation method recommending unit 12 or 12A may recommend a validation method by using any one of the degree of overlap of distributions of the training data D1_1 and the test data D1_2 (Overlap), comparison of summary statistics (for example, a maximum, a minimum, a median, an average value, a variance value, and any quantile value), a Euclidean distance, a Mahalanobis distance, a Chebyshev distance, a Hamming distance, a Manhattan distance, a Minkowski distance, a dynamic time warping (DTW) distance, a canonical time warping (CTW) distance, Histogram Intersection, KL Divergence, JS Divergence, a Pearson distance, and a relative Pearson distance, or a combination thereof.

In addition, the data type determining unit 14 may determine the data type by combining the data type (int (integer), float (decimal), str (character), bool (true/false), datetime (date and time), nan) of the value, the number of elements of the value, the frequency of the value, the label name of the data, the periodicity (year, month, day, and time), the correlation value (partial autocorrelation coefficient, correlation coefficient with target variable), the summary statistic of the data, the lug feature amount, and the magnitude relationship between the values.

The distribution calculating unit 15 may generate the distribution information D1_4 by using any one of the degree of overlap of distributions of the training data D1_1 and the test data D1_2 (Overlap), comparison of summary statistics (for example, a maximum, a minimum, a median, an average value, a variance value, and any quantile value), a Euclidean distance, a Mahalanobis distance, a Chebyshev distance, a Hamming distance, a Manhattan distance, a Minkowski distance, a dynamic time warping (DTW) distance, a canonical time warping (CTW) distance, Histogram Intersection, KL divergence, JS divergence, a Pearson distance, and a relative Pearson distance, or a combination thereof.

As described above, the validation method determining device 1A according to the second embodiment includes the data type determining unit 14 that determines the data type of the column data constituting the training data D 1_1 and the test data D 1_2 and generates the data type information D1_3. The validation method determining device 1A can determine the data type of the column data constituting these pieces of data using the training data D1_1 and the test data D1_2.

The validation method determining device 1A according to the second embodiment includes the distribution calculating unit 15 that calculates a difference between the distribution of the training data D1_1 and the distribution of the test data D1_2 and outputs the distribution information D1_4 indicating the calculated distribution difference. The validation method recommending unit 12A recommends a validation method on the basis of the distribution information D1_4. The validation method determining device 1A can calculate a distribution difference between the training data D1_1 and the test data D1_2 using the training data D1_1 and the test data D1_2.

The validation method determining device 1A according to the second embodiment includes the ordering unit 16 that orders the column data from which the validation data is extracted using the data type information D1_3 and the distribution information D1_4 and outputs the order information indicating the order of the column data.

The validation method determining device 1A can perform the ordering of the column data using the data type information D1_3 and the distribution information D1_4.

The validation method determining device 1A according to the second embodiment includes the user feedback unit 17 that the outputs presentation information D4 regarding recommendation of a validation method and outputs the feedback information D5 for the presentation information D4 to the validation method recommending unit 12A. The validation method recommending unit 12A recommends a validation method in accordance with the acquired feedback information D5. The validation method recommending unit 12A can recommend a validation method in accordance with the feedback information D5 from the user to the validation method determining unit 13A.

The validation method determining device 1A according to the second embodiment includes the user feedback unit 17 that outputs the presentation information D6 regarding determination of a validation method and outputs the feedback information D7 for the presentation information D6 to the validation method determining unit 13A. The validation method determining unit 13A determines whether or not to use the recommended validation method for estimating the prediction performance of the predictor on the basis of the acquired feedback information D7.

The validation method determining device 1A can determine a validation method to be used for estimation of prediction performance of a predictor, using the feedback information D7 from the user.

In the validation method determining device 1A according to the second embodiment, the user feedback unit 17 outputs inquiry information as to whether or not to predict future data using past data as presentation information, and outputs feedback information with respect to the presentation information to the validation method recommending unit 12A. When the feedback information indicating that the future data is predicted using the past data is acquired, the validation method recommending unit 12A recommends a validation method for extracting the training data and the validation data in such a manner that the time-series order relationship between the training data and the validation data is maintained. In this manner, the validation method recommending unit 12A can recommend the validation method in accordance with the feedback information D5 from the user to the validation method determining unit 13A.

In the validation method determining device 1A according to the second embodiment, the user feedback unit 17 outputs inquiry information as to whether or not prediction is performed for an unknown category as presentation information, and outputs feedback information with respect to the presentation information to the validation method recommending unit 12A. When the feedback information indicating that prediction is performed for an unknown category is acquired, the validation method recommending unit 12A recommends a validation method for extracting training data and validation data in units of groups. When the feedback information indicating that prediction is not performed for an unknown category is acquired, the validation method recommending unit 12A recommends a validation method for extracting the training data and the validation data in such a manner that the rates of the training labels are the same. In this manner, the validation method recommending unit 12A can recommend the validation method in accordance with the feedback information D5 from the user to the validation method determining unit 13A.

In the validation method determining device 1A according to the second embodiment, the user feedback unit 17 outputs, as presentation information, inquiry information as to whether or not prediction is performed while maintaining the magnitude relationship between the training data and the test data, and outputs feedback information with respect to the presentation information to the validation method recommending unit 12A.

When the feedback information indicating that prediction is performed while maintaining the magnitude relationship between the training data and the test data is acquired, the validation method recommending unit 12A recommends a validation method for extracting the training data and the validation data in such a manner that the magnitude relationship between the training data and the test data is maintained.

Further, when the feedback information indicating that prediction is not performed while maintaining the magnitude relationship between the training data and the test data is acquired, and the distribution difference between the distribution of the training data and the distribution of the test data is equal to or more than the threshold value, the validation method recommending unit 12A recommends a validation method for extracting the training data and the validation data in such a manner that the rates of the training labels are the same. Furthermore, when the feedback information indicating that prediction is not performed while maintaining the magnitude relationship between the training data and the test data is acquired, and the distribution difference between the distribution of the training data and the distribution of the test data is less than the threshold value, the validation method recommending unit 12A recommends a validation method for extracting the training data and the validation data in such a manner that the localization relationship between the training data and the test data is maintained.

In this manner, the validation method recommending unit 12A can recommend the validation method in accordance with the feedback information D5 from the user to the validation method determining unit 13A.

Note that combinations of the individual embodiments, modifications of any components of the individual embodiments, or omissions of any components in the individual embodiments are possible.

### INDUSTRIAL APPLICABILITY

The validation method determining device according to the present disclosure is effective for a supervised task of general machine learning, and can be used for, for example, a task related to identification, a task related to regression (prediction), or an automated machine learning (AutoML) system related thereto.

### REFERENCE SIGNS LIST

1, 1A: validation method determining device, 11, 11A: data acquiring unit, 12, 12A: validation method recommending unit, 13, 13A: validation method determining unit, 14: data type determining unit, 15: distribution calculating unit, 16: ordering unit, 17: user feedback unit, 100: input interface, 101: output interface, 102: processing circuit, 103: processor, 104: memory

## Claims

1. A validation method determining device comprising:
a data acquiring unit to acquire training data to be used for training of a predictor and test data to be used for measurement of prediction accuracy of the predictor;
a validation method recommending unit to perform recommendation of a validation method for extracting the training data and validation data corresponding to a prediction target using the training data, the test data, and data type information indicating data types of column data constituting the training data and the test data; and
a validation method determining unit to determine a validation method to be used for estimation of prediction performance of the predictor from a validation method obtained by the recommendation.

2. The validation method determining device according to claim 1, wherein
the validation method recommending unit performs the recommendation of the validation method for extracting the training data and the validation data in such a manner that a time-series order relationship between the training data and the validation data is maintained.

3. The validation method determining device according to claim 1, wherein
the validation method recommending unit performs the recommendation of the validation method for extracting the training data and the validation data in such a manner that rates of training labels are same.

4. The validation method determining device according to claim 1, wherein
the validation method recommending unit performs the recommendation of the validation method for extracting the training data and the validation data in units of groups.

5. The validation method determining device according to claim 1, wherein
the validation method recommending unit performs the recommendation of the validation method for extracting the training data and the validation data in such a manner that a magnitude relationship between the training data and the test data is maintained.

6. The validation method determining device according to claim 1, wherein
the validation method recommending unit performs the recommendation of the validation method for extracting the training data and the validation data in such a manner that a localization relationship between the training data and the test data is maintained.

7. The validation method determining device according to claim 1, further comprising a data type determining unit to generate the data type information by determining a data type of column data constituting each of the training data and the test data.

8. The validation method determining device according to claim 1, further comprising:
a distribution calculating unit to calculate a difference between a distribution of the training data and a distribution of the test data and outputs distribution information indicating the difference calculated, wherein
the validation method recommending unit performs the recommendation of the validation method on a basis of the distribution information.

9. The validation method determining device according to claim 8, further comprising:
an ordering unit to perform ordering of the column data from which the validation data is extracted by using the data type information and the distribution information, and output order information indicating the ordering of the column data.

10. The validation method determining device according to claim 1, further comprising:
a feedback unit to output presentation information regarding the recommendation of the validation method and output feedback information with respect to the presentation information to the validation method recommending unit, wherein
the validation method recommending unit performs the recommendation of the validation method corresponding to the feedback information acquired.

11. The validation method determining device according to claim 1, further comprising:
a feedback unit to output presentation information regarding determination of the validation method and output feedback information with respect to the presentation information to the validation method determining unit, wherein
the validation method determining unit determines whether or not the validation method obtained by the recommendation is used for the estimation of the prediction performance of the predictor on a basis of the feedback information acquired.

12. The validation method determining device according to claim 10, wherein
the feedback unit outputs, as the presentation information, inquiry information as to whether or not to predict future data using past data, and outputs the feedback information with respect to the presentation information to the validation method recommending unit, and
when the feedback information indicating that the future data is predicted using the past data is acquired, the validation method recommending unit performs recommendation of the validation method for extracting the training data and the validation data in such a manner that a time-series order relationship between the training data and the validation data is maintained.

13. The validation method determining device according to claim 10, wherein
the feedback unit outputs, as the presentation information, inquiry information as to whether or not prediction is performed for an unknown category, and outputs the feedback information with respect to the presentation information to the validation method recommending unit, and
the validation method recommending unit performs the recommendation of the validation method in units of groups when the feedback information indicating that prediction is performed for an unknown category is acquired, and
the validation method recommending unit performs the recommendation of the validation method, when the feedback information indicating that prediction is not performed for an unknown category is acquired, in such a manner that rates of training labels are same.

14. The validation method determining device according to claim 10, wherein
the feedback unit outputs, as the presentation information, inquiry information as to whether or not prediction is performed while maintaining a magnitude relationship between the training data and the test data, and outputs the feedback information with respect to the presentation information to the validation method recommending unit, and
the validation method recommending unit performs the recommendation of the validation method in such a manner that a magnitude relationship between the training data and the test data is maintained when the feedback information indicating that prediction is performed while maintaining the magnitude relationship between the training data and the test data is acquired,
the validation method recommending unit performs the recommendation of the validation method, when the feedback information indicating that prediction is not performed while maintaining a magnitude relationship between the training data and the test data is acquired and a distribution difference between a distribution of the training data and a distribution of the test data is equal to or more than a threshold value, in such a manner that rates of training labels are same, and
the validation method recommending unit performs the recommendation of the validation method, when the feedback information indicating that prediction is not performed while maintaining a magnitude relationship between the training data and the test data is acquired and a distribution difference between the distribution of the training data and the distribution of the test data is less than the threshold value, in such a manner that a localization relationship between the training data and the test data is maintained.

15. A validation method determining method comprising:
acquiring, by a data acquiring unit, training data to be used for training of a predictor and test data to be used for measurement of prediction accuracy of the predictor;
recommending, by a validation method recommending unit, a validation method for extracting the training data and validation data corresponding to a prediction target using data type information indicating data types of the training data, the test data, and column data constituting both the data; and
determining, by a validation method determining unit, a validation method to be used for estimation of prediction performance of the predictor from a recommended validation method.
